# EUROPÄISCHE PATENTANMELDUNG

(11) **EP 1 495 935 A1**
(43) Veröffentlichungstag der Anmeldung: **12.01.2005**
(21) Anmeldenummer: 04450127.8
(22) Anmeldetag: 14.06.2004
(51) Int. Cl.: B61B 12/00, A47C 7/74

(54) **Einrichtung zur Personenbeförderung auf einer Seilbahnanlage**

(30) Priorität: 11.07.2003 AT 10712003
(71) Anmelder: Innova Patent GmbH, 6960 Wolfurt (AT)
(72) Erfinder: Music, Elvis, 6900 Bregenz (AT)
(74) Vertreter: Hehenberger, Reinhard, Dipl.-Ing.

(57) **Zusammenfassung**

Um das von Schifahrern als unangenehm empfundene Auskühlen von Sitzen auf Sesselliften zu verhindern, weisen die Sitze (7) wenigstens ein Element (10) auf, das bei Betriebstemperatur eine gute Wärmespeicherkapazität aufweist. Dieses Element (10) ist bevorzugt in den Sitz- und/oder Rückenpolster (8,9) integriert und umfasst beispielsweise eine Hülle (30), in welcher ein fester oder fluider Stoff mit gut wärmespeichernder Eigenschaft aufgenommen ist.

## Beschreibung

Die Erfindung betrifft eine Einrichtung zur Personenbeförderung auf einer Seilbahnanlage, wobei die Einrichtung über eine Befestigungseinrichtung mit einem Trag- und Förderseil verbindbar ist und wenigstens einen Sitz mit Sitz- und gegebenenfalls Rückenpolstern aufweist. Die Erfindung betrifft des weiteren eine Seilbahnanlage, die mit einer Vielzahl von derartigen Einrichtungen ausgestattet ist.

Im Stand der Technik sind Sessel von Seilbahnanlagen bekannt, die mit verschwenkbaren Hauben ausgestattet sind, durch welche die Sitze und die zu befördernden Personen während des Betriebes der Seilbahnanlage gegenüber ungünstigen, klimatischen Einflüssen, wie Schneefall und Kälte, geschützt werden können. Diese Hauben bieten jedoch nur einen begrenzten Schutz gegen Kälte, wobei, insbesondere bei sehr niedrigen Umgebungstemperaturen, die starke Abkühlung der Sitzflächen von den zu befördernden Personen als unangenehm empfunden wird. Dieser Nachteil trifft aber nicht nur für Sessellifte zu, sondern, wenn auch in einem etwas geringeren Ausmaß, auch für Kabinenbahnen.

Um den Komfort für die auf den Sitzen einer Seilbahnanlage zu befördernden Personen zu erhöhen, liegt der vorliegenden Erfindung daher die Aufgabe zu Grunde, Einrichtungen zur Beförderung der Personen zur Verfügung zu stellen, welche diese Nachteile nicht aufweisen.

Gelöst wird diese Aufgabe mit einer Einrichtung mit den Merkmalen des Anspruches 1.

Herkömmliche Sitz- und Rückenpolster der Sitze von Seilbahnanlagen kühlen, nachdem sich eine Person von diesen erhebt, wieder sehr rasch ab, da diese nur ein sehr geringes Wärmespeichervermögen aufweisen, so dass der Sitz wieder kalt ist bzw. Umgebungstemperatur angenommen hat, bis sich die nächste Person auf diesen setzt. Bei der Erfindung wird daher vorgeschlagen, in den Sitz wenigstens ein Element zu integrieren, das in der Lage ist, größere Wärmemengen zu speichern. Idealerweise nimmt man dafür Elemente, die bei Betriebstemperatur eine größere Menge an latenter Wärme speichern können. Es ist aber auch möglich, für diesen Zweck Elemente oder Stoffe mit im Vergleich zu herkömmlichen Sitzen bei Betriebstemperatur besserer Wärmespeicherkapazität zu verwenden. Beispielhaft wird auf mit einem Gel gefüllte Beutel verwiesen, die an sich aus medizinischen oder therapeutischen Kälte- bzw. Wärmebehandlungen bekannt sind.

Unter Betriebstemperatur wird im vorliegenden Zusammenhang jene Temperatur verstanden, die von den zu befördernden Personen als angenehm empfunden wird, und z.B. zwischen 5 und 40° C liegt. Je nach Beschaffenheit der Sitz- und Rückenpolster und der Anordnung des Elementes an diesen sowie allfälliger isolierender Schichten kann die Betriebstemperatur des Elementes auch über oder unter diesen Werten liegen.

Da die Elemente größere Mengen an Wärme speichern können, können diese über einen längeren Zeitraum eine Temperatur innerhalb dieses Betriebstemperaturbereiches halten, so dass die Sitze nicht so schnell auskühlen.

Sehr gute Eigenschaften weisen in diesem Zusammenhang Elemente mit einem Stoff auf, der bei Betriebstemperatur eine latente Wärme speichernde Kapazität aufweist, da diese über einen längeren Zeitraum Wärme bei konstanter Temperatur abgeben können.

Die zu speichernde Wärmekapazität kann je nach Wunsch größer oder kleiner gewählt werden, wobei die geringste Menge jene ist, die erforderlich ist, um den Sitz oder Polster solange warm zu halten, bis eine Person eine Strecke, d.h. beispielsweise von der Talstation zur Bergstation, befördert wurde, mit der Möglichkeit, das Element bis zur Beförderung der nächsten Person wieder auf Betriebstemperatur zu bringen. Es ist aber auch möglich, höhere Wärmemengen zu speichern, die für mehr Beförderungszyklen ausreichend sind, beispielsweise in den kühleren Morgenstunden, mit der Möglichkeit, die Elemente regelmäßig, das heißt z.B. bei jedem Durchlauf des Sessels durch eine Station der Seilbahnanlage oder auch nur in größeren Intervallen, wieder aufzuheizen.

Es ist in einer Ausführungsform der Erfindung auch möglich, dass die Heizeinrichtung einen Anschluss für einen am Sessel befindlichen Energiespeicher, beispielsweise eine Batterie, aufweist. Dabei besteht die Möglichkeit, das Element permanent oder in Intervallen und gegebenenfalls nur bei Bedarf, z.B. wenn die Temperatur des Elementes unter einen bestimmten Wert sinkt, mittels der Batterie wieder aufzuheizen. Die Batterie, genauer gesagt ein Akkumulator, könnte ihrerseits beim Durchlauf durch eine Station bei Bedarf, z.B. wenn ihre Ladekapazität unter einen bestimmten Wert sinkt, wieder aufgeladen werden. Wenn im Zusammenhang mit der vorliegenden Erfindung daher von Batterien die Rede ist, gilt dies gleichermaßen für Akkumulatoren.

Stoffe, die bei den bei der Erfindung gewünschten Betriebstemperaturen latente Wärme speichernde Eigenschaften aufweisen, sind im Stand der Technik hinlänglich bekannt. Beispielhaft wird auf Pulversubstanzen aus Paraffin und Silikat oder auf Salze, wie Natriumacetat-Trihydrat (NaCH₃CO₂.3H₂O), das einen Schmelzpunkt von zirka 58°C aufweist, verwiesen. Die jeweiligen Stoffe können von Hüllen oder Beuteln umgeben sein, welche dann in den Sitz- und/oder Rückpolster integriert werden können. Je nach wärmespeichernder Eigenschaft der das Element umgebenden Schichten des Polsters, insbesondere an der Sitzfläche für die zu befördernde Person, muss als Betriebstemperatur eine Temperatur gewählt werden, die durch die Umhüllung von der zu befördernden Person als angenehm empfunden wird, bei einer guten Isolierung also höher als wenn eine schlechtere Isolierung gewählt wird oder die Person direkt auf der Hülle sitzt bzw. sich an der Hülle anlehnt.

Bei der Erfindung können im Gegensatz zu festen, das heißt körnigen oder fluiden Stoffen, die in einem flexiblen Beutel aufgenommen sind, auch Körper mit fester Raumform verwendet werden, in welchen ein Stoff mit den gewünschten, wärmespeichernden Eigenschaften aufgenommen ist. Beispielsweise ist es denkbar, dass das Element ein geschäumter Körper ist, in welchen der wärmespeichernde Stoff eingeschäumt ist. Es sind aber auch Elemente denkbar, die aus gewebeartigen oder vliesartigen Materialien bestehen, bei denen die einzelnen Fasern mit einem wärmespeichernden Stoff versehen bzw. umhüllt sind oder aus diesem bestehen. In diesem Zusammenhang wird beispielsweise auf die US 6 217 993 B1 verwiesen, in der ein Material beschrieben wird, das für den im Rahmen der vorliegenden Erfindung gewünschten Zweck verwendbar ist.

Wenngleich es grundsätzlich denkbar ist, dass die Elemente mit der wärmespeichernden Kapazität nur dadurch wieder aufgeheizt werden können, dass sie vom Sessel abgenommen und in einer externen Heizeinrichtung wieder erwärmt werden, ist es im Rahmen der vorliegenden Erfindung bevorzugt, wenn das Element mit einer Heizeinrichtung verbunden ist.

Diese Heizeinrichtung kann das Element wenigstens bereichsweise umgeben oder innerhalb des Elementes angeordnet sein. Als Heizeinrichtung sind Heizfolien mit aufgedruckten Heizschlangen oder Heizmatten mit eingewebten Kohlefasern oder in das Element integrierte Heizschlangen denkbar.

Um zu verhindern, dass in Zeiten, in denen kein Benutzer auf dem Sitz sitzt, zu viel Wärme an die Umgebung verloren geht, können im Rahmen der Erfindung Maßnahmen vorgesehen sein, die in diesen Zeiten den Wärmverlust verringern. Dabei kommen z.B. wärmeisolierende Hüllen oder Schichten in Frage, die auf der dem Benutzer zugewandten Seite ein geringeres Wärmeleitvermögen aufweisen, wenn eine Person auf dem Polster sitzt oder sich daran anlehnt. Dies kann beispielsweise dadurch erfolgen, dass die wärmeisolierende Hülle kompressibel ist und ein isolierendes Medium, beispielsweise Luft, beim Draufsetzen bzw. Anlehnen verdrängt wird, wodurch der Wärmeübergang automatisch erhöht wird. Beispielsweise kommen dafür offenporige, geschäumte Kunststoffe in Frage.

Bevorzugte Ausführungsformen der Erfindung sind Gegenstand der Unteransprüche.

Weitere Merkmale und Vorteile der Erfindung ergeben sich aus der nachstehenden Beschreibung bevorzugter Ausführungsbeispiele der Erfindung mit Bezug auf die Zeichnungen.

Es zeigt:

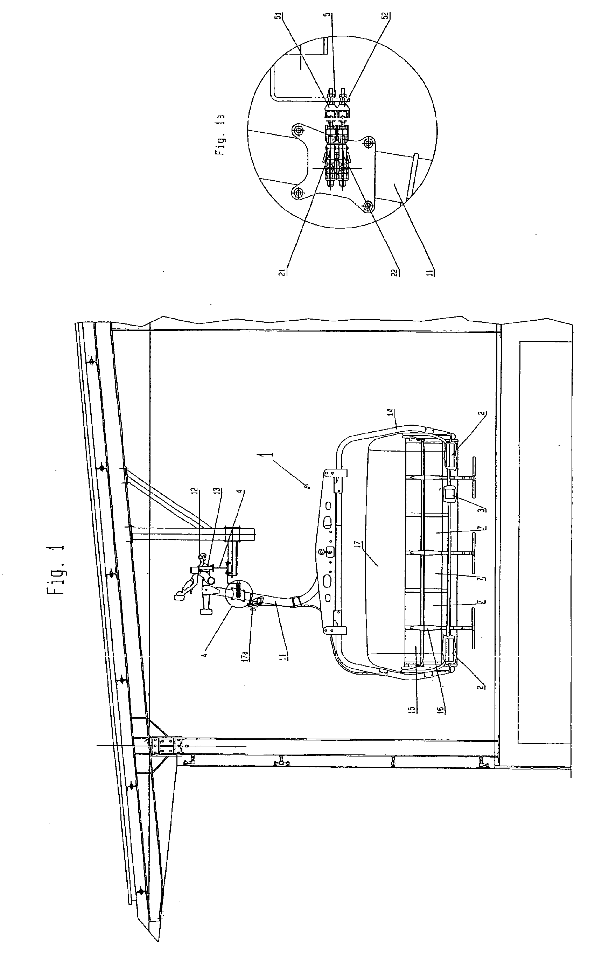

Fig.1 einen in einer Station befindlichen Sessel einer erfindungsgemäßen Seilbahnanlage, in Vorderansicht;
Fig.1 a das Detail A der Fig.1, in gegenüber Fig. 1 vergrößertem Maßstab;
Fig.2 eine zweite Ausführungsform eines Sessels einer erfindungsgemäßen Seilbahnanlage, in Vorderansicht;
Fig.2a den Sessel gemäß Fig. 2, in Seitenansicht;
Fig.3 eine dritte Ausführungsführungsform eines Sessels einer erfindungsgemäßen Seilbahnanlage, in Vorderansicht;
Fig.3a den Sessel gemäß Fig. 3, in Seitenansicht;
Fig.4 ein vierte Ausführungsführungsform eines Sessels einer erfindungsgemäßen Seilbahnanlage, in Vorderansicht;
Fig.4a den Sessel gemäß Fig.4, in Seitenansicht;
Fig.5 eine bei einer erfindungsgemäßen Seilbahnanlage vorgesehene Speicheranlage für eine Vielzahl von Sesseln, in Draufsicht;
Fig.6 einen Sitz eines erfindungsgemäßen Sessels in axonometrischer Darstellung;
Fig.7 einen Sitz eines erfindungsgemäßen Sessels in axonometrischer Darstellung, teilweise im Schnitt; und
Fig.8 ein Detail aus Fig.7 in vergrößertem Maßstab.

In Fig.1 ist eine Station einer erfindungsgemäßen Seilbahnanlage dargestellt, in welcher sich ein Sessel 1 mit sechs Sitzen 7 für sechs Personen befindet. Dieser Sessel 1 weist eine Tragstange 11, an deren oberen Ende eine Kupplungseinrichtung 12 und ein Laufwerk 13 vorgesehen sind, und ein Traggestell 14 auf, auf welchem sich eine Sitzbank 15 befindet und an welchem ein Schließbügel 16 verschwenkbar gelagert ist. Zudem ist der Sessel 1 mit einer Haube 17 ausgebildet, welche mittels einer Steuereinrichtung 17a verschwenkbar ist.

Mittels der Kupplungseinrichtung 12 ist der Sessel 1 an das Tragund Förderseil der Seilbahnanlage ankuppelbar. Mittels des Laufwerkes 13 ist der Sessel 1 in den Stationen, in welchen er vom Tragund Förderseil abgekuppelt ist, längs Führungsschienen 4 durch die Stationen hindurch bewegbar.

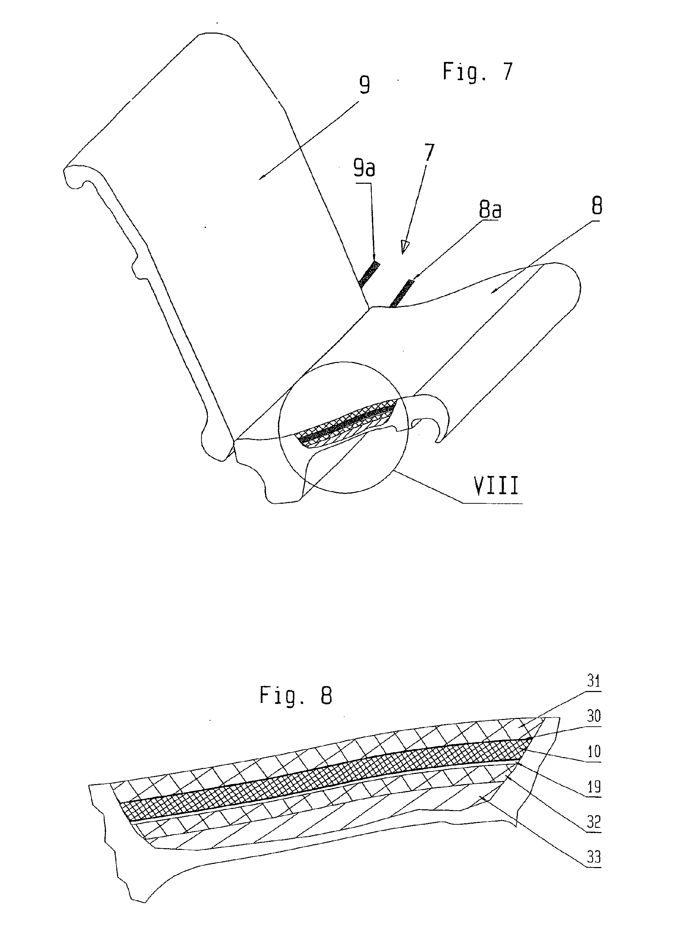

Wie die Fig. 7 und 8 zeigen, sind die Sitzpolster 8 und gegebenenfalls auch die Rückenpolster 9 der Sitze 7 jeweils mit einem Element 10 ausgestattet, das bei Betriebstemperatur ein hohes Speichervermögen für latente Wärme aufweist. Zur Versorgung von Heizeinrichtungen 19 für diese Elemente 10 sind an jedem Sessel 1 Anschlüsse 8a, 9a an eine externe Stromquelle und eine Steuereinrichtung 3 vorgesehen, welche sich unterhalb der Sitzfläche befindet. Die Erwärmung der Elemente 10 mittels der Heizelemente 19 kann einerseits außerhalb der Betriebszeiten der Seilbahnanlage während der Garagierung der Sessel 1 erfolgen. Sie kann andererseits auch während des Betriebes der Seilbahnanlage während der Bewegung der Sessel 1 durch die Stationen hindurch erfolgen. Dies kann bei jedem Durchfahren der Station erfolgen oder nur bei einem Unterschreiten einer vorgegebenen Mindesttemperatur der Elemente 10. Da die Sessel 1 in den Stationen vom Trag- und Förderseil abgekuppelt sind und längs der Führungsschienen 4 mit einer gegenüber der Fördergeschwindigkeit des Trag- und Förderseiles wesentlich verminderten Geschwindigkeit durch die Stationen hindurchgeführt werden, steht für die Erwärmung der Elemente 10 bei Sesselliften ein Zeitraum von etwa 10-20 sec und bei Kabinenbahnen von etwa 30-60 sec zur Verfügung.

Zur Versorgung der Heizeinrichtungen 19 können an jedem Sessel 1 auch z.B. zwei Batterien 2 vorgesehen sein, welche sich unterhalb der Sitzfläche befinden. In diesem Fall kann anstelle der direkten Beheizung der Elemente 10 mittels der Heizelemente 19 während der Durchfahrt durch die Station die Aufladung der Batterien 2 außerhalb der Betriebszeiten der Seilbahnanlage während der Garagierung der Sessel 1 oder auch während des Betriebes der Seilbahnanlage während der Bewegung der Sessel 1 durch die Stationen hindurch erfolgen. Zudem kann die Aufladung der Batterien 2 mittels fotovoltaischer Elemente erfolgen.

Wie dies insbesondere aus Fig. 1a ersichtlich ist, befinden sich für das Aufladen der Batterien 2 oder das direkte Beheizen der Heizelemente 19 in den Stationen Stromschienen 5 mit zwei Stromleitern 51 und 52, welchen an der Tragstange 11 Stromabnehmer 21 und 22 zugeordnet sind. Über diese Stromabnehmer 21 und 22 werden die Batterien 2 oder die Heizelemente 19 während der Durchfahrt der Sessel 1 durch die Stationen hindurch mit Strom gespeist.

Die Steuereinrichtung 3 dient dazu, die Beheizung der Sitz- und Rückenpolster 8, 9 der Sessel 1 zu steuern. Es ist dabei vorgesehen, die Polster 8, 9 dann zu beheizen, sobald die Sessel 1 in die Stationen einfahren und in der Folge benützt werden, wobei dies insbesondere für diejenigen Sitze 7 der Fall ist, welche bei der Einfahrt der Sessel in die Stationen nicht belegt waren, weswegen sie während deren Bewegung über die Strecke stärker abgekühlt wurden. Vorzugsweise sind hierfür in den Sitzen Temperatursensoren vorgesehen, deren Ausgänge an die Steuereinrichtungen 3 angeschlossen sind. Bei der Verwendung von Batterien kann das Beheizen der Elemente 10 aber auch kontinuierlich, in jedem Fall aber unabhängig von der jeweiligen Position des Sessels 1 auf der Seilbahnanlage und zum Beispiel nur bei einem Unterschreiten einer vorgegebenen Mindesttemperatur der Elemente 10 erfolgen.

Es ist auch möglich, nicht an jedem Sessel 1, sondern nur in einer Station einen Temperatursensor sowie eine Steuerung vorzusehen, über den dann bei Bedarf zentral die Aufladung der Batterien 2 oder Beheizung der Elemente 10 gesteuert wird. Auch kann bei nur einem einzigen Sessel 1 ein Sensor vorgesehen sein, der seine Messdaten über Funk oder beim Durchlauf durch eine Station an eine zentrale Steuerung für die Aufladung der Batterien 2 oder Beheizung der Elemente 10 weiterleitet.

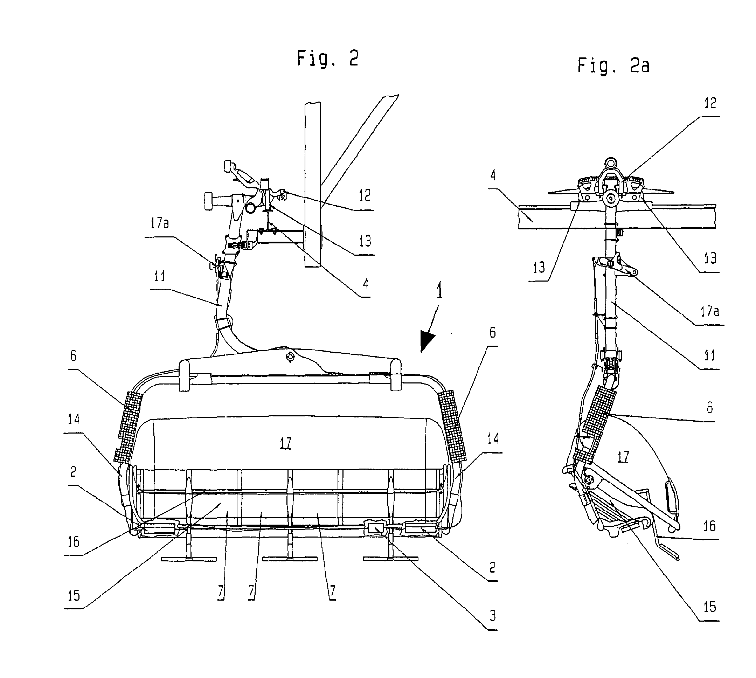

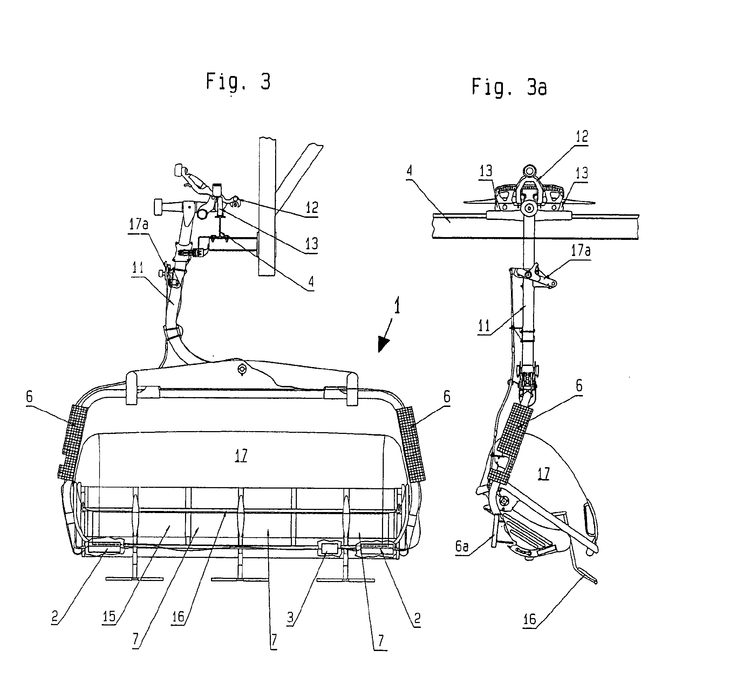

Der in den Fig.2 und 2a dargestellte Sessel 1 unterscheidet sich vom Sessel 1 gemäß Fig.1 dadurch, dass er auf beiden Seiten des Traggestelles 14 mit fotovoltaischen Elementen 6 ausgestattet ist, durch welche die Batterien 2 oder die Elemente 10 auch während der Fahrt der Sessel 1 über die Strecke mit Strom gespeist und dadurch aufgeladen bzw. erwärmt werden. Beim Ausführungsbeispiel gemäß den Fig.3 und 3a ist an der Rückseite des Sessels 1 ein weiteres fotovoltaisches Element 6a angeordnet.

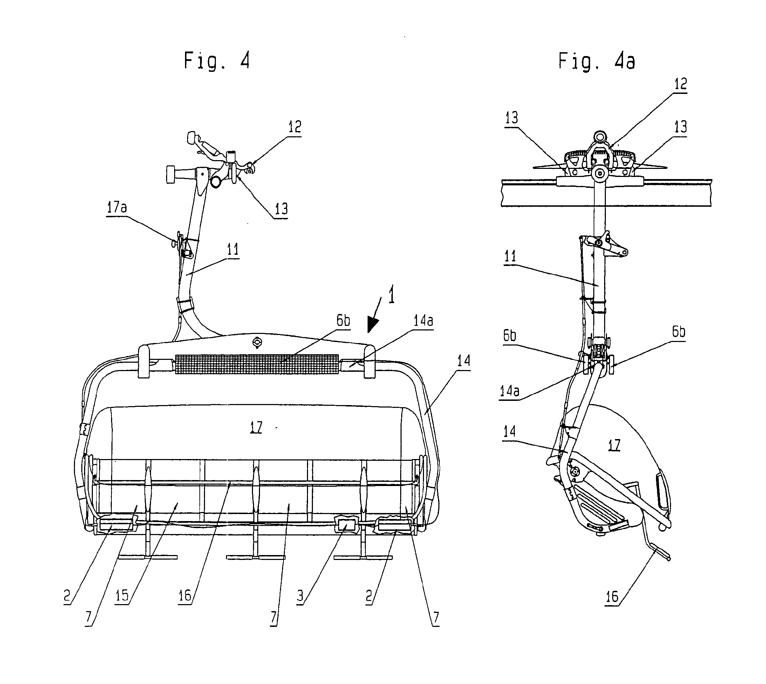

Beim Ausführungsbeispiel gemäß den Fig.4 und 4a sind an der Vorderseite und an der Rückseite des horizontalen Balkens 14a des Traggestells 14 oberhalb der Sitzbank 15 zwei fotovoltaische Elemente 6b angeordnet.

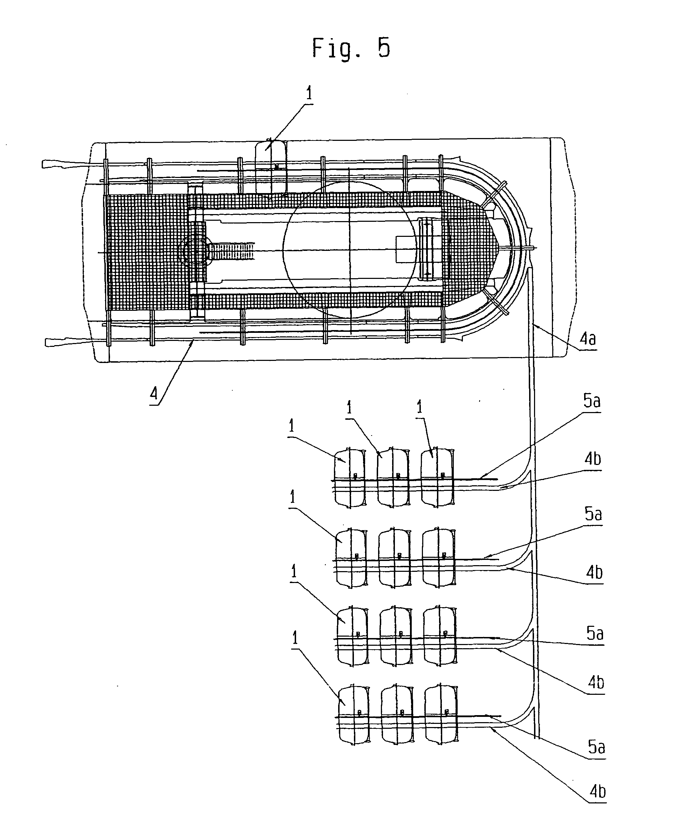

In Fig.5 ist eine der Stationen der Seilbahnanlage dargestellt, durch welche die Sessel 1 während des Betriebes der Seilbahnanlage längs der Führungsschienen 4 hindurch bewegt werden. Dabei ist der Station eine Anlage zur Speicherung der Sessel 1 außerhalb der Betriebszeiten der Seilbahnanlage zugeordnet. Diese Speicheranlage weist eine Mehrzahl von Speicherschienen 4b auf, welche mittels einer Verbindungsschiene 4a an die Führungsschiene 4 anschließbar sind und auf welche die Sessel 1 zu deren Speicherung außerhalb der Betriebszeiten der Seilbahnanlage verschiebbar sind. Den Speicherschienen 4b sind Stromschienen 5a zugeordnet, über welche die Batterien 2 oder Elemente 10 mittels der Stromabnehmer 21, 22 während der Speicherung der Sessel 1 aufladbar sind.

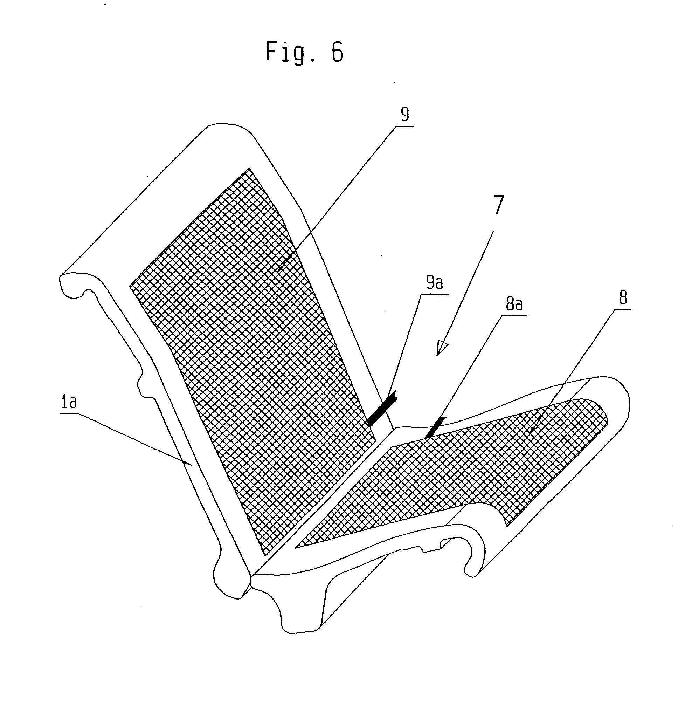

In Fig.6 ist schließlich ein Sitz 7 dargestellt, welcher sowohl in seinem Sitzbereich als auch in seinem Rückenbereich beheizte Polster 8 und 9 aufweist, welche über Anschlüsse 8a und 9a unter Zwischenschaltung der Steuerschaltung 3 an die Batterien 2 angeschlossen sind.

In den Fig. 7 und 8 ist eine Ausführungsform der Erfindung beispielhaft dargestellt, bei der das Element 10 aus einem Beutel 30 mit einem latente Wärme speichernden Stoff besteht. Umgeben ist der Beutel 30 von einer Isolierschicht 31, 32, wobei die auf der Oberseite angeordnete Schicht 31 aus einem komprimierbaren, offenporigen Kunststoff besteht. Dadurch weist die obere Schicht 31 im unbelasteten Zustand, d.h. wenn keine Person darauf sitzt, ein gutes Isolierverhalten auf. Wenn allerdings eine Person auf dem Sitz sitzt, wird die Schicht 31 komprimiert, wodurch die Luft aus den Poren entweicht und die Isoliereigenschaften dieser Schicht daher stark verringert werden. Dadurch wird der Wärmeübergang vom Element 10 auf die Person stark verbessert. Unter der unteren Isolierschicht 32 aus einem nicht komprimierbaren, gut isolierenden Kunststoff befindet sich der Rahmen 33 des Sitzes. Zwischen dem Beutel 30 und der unteren Isolierschicht 32 ist eine Heizfolie 19 angeordnet, die das Element 10 bei Bedarf beheizt.

Zusammenfassend kann ein Ausführungsbeispiel der Erfindung wie folgt dargestellt werden:

Um das von Schifahrern als unangenehm empfundene Auskühlen von Sitzen auf Sesselliften zu verhindern, weisen die Sitze 7 wenigstens ein Element 10 auf, das bei Betriebstemperatur eine gute Wärmespeicherkapazität aufweist. Dieses Element 10 ist bevorzugt in den Sitzund/oder Rückenpolster 8, 9 integriert und umfasst beispielsweise eine Hülle 30, in welcher ein fester oder fluider Stoff mit gut wärmespeichernder Eigenschaft aufgenommen ist.

## Patentansprüche

1. Einrichtung zur Personenbeförderung auf einer Seilbahnanlage, wobei die Einrichtung über eine Betestigungseinricntung (12) mit einem Trag- und Förderseil verbindbar ist und wenigstens einen Sitz (7) mit Sitz- und gegebenenfalls Rückenpolstern (8,9) aufweist, **dadurch gekennzeichnet, dass** der Sitz (7) wenigstens ein Element (10) aufweist, das bei Betriebstemperatur eine gute Wärmespeicherkapazität aufweist.

2. Einrichtung nach Anspruch 1, **dadurch gekennzeichnet, dass** das Element (10) in den Sitz- und/oder Rückenpolster (8,9) integriert ist.

3. Einrichtung nach Anspruch 1 oder 2, **dadurch gekennzeichnet, dass** das Element (10) eine Hülle (30) umfasst, in welcher ein fester oder fluider Stoff mit gut wärmespeichernder Eigenschaft aufgenommen ist.

4. Einrichtung nach Anspruch 1 oder 2, **dadurch gekennzeichnet, dass** das Element (10) ein Körper mit fester Raumform, beispielsweise mit geschäumter oder gewebeartiger Struktur, ist, in welchem ein Stoff mit gut wärmespeichernden Eigenschaften aufgenommen ist.

5. Einrichtung nach einem der Ansprüche 1 bis 4, **dadurch gekennzeichnet, dass** das Element (10) mit einer Heizeinrichtung (19) verbunden ist.

6. Einrichtung nach Anspruch 5, **dadurch gekennzeichnet, dass** die Heizeinrichtung (19) das Element (10) wenigstens bereichsweise umgibt.

7. Einrichtung nach Anspruch 5, **dadurch gekennzeichnet, dass** die Heizeinrichtung (19) innerhalb des Elementes (10) angeordnet ist.

8. Einrichtung nach einem der Ansprüche 5 bis 7, **dadurch gekennzeichnet, dass** die Heizeinrichtung (19) eine flächige Form aufweist, auf der oder in der Wärme abgebende Heizleitungen angebracht sind.

9. Einrichtung nach Anspruch 8, **dadurch gekennzeichnet, dass** die Heizleitungen elektrische Heizleiter sind.

10. Einrichtung nach einem der Ansprüche 5 bis 9, **dadurch gekennzeichnet, dass** die Heizeinrichtung (19) einen Anschluss (8a,9a) für einen an der Einrichtung (1) befindlichen Energiespeicher (2), beispielsweise eine Batterie, aufweist.

11. Einrichtung nach einem der Ansprüche 5 bis 9, **dadurch gekennzeichnet, dass** die Heizeinrichtung (19) und/oder der Energiespeicher (2) einen Anschluss (21,22) für eine externe, nicht an der Einrichtung (1) befindliche Energiequelle aufweist.

12. Einrichtung nach Anspruch 11, **dadurch gekennzeichnet, dass** der Anschluss (21,22) an der Einrichtung (1), z.B. an der Befestigungseinrichtung (12) oder einer Tragstange (11) der Einrichtung (1), angeordnet ist.

13. Einrichtung nach einem der Ansprüche 3 bis 12, **dadurch gekennzeichnet, dass** der wärmespeichernde Stoff derart beschaffen ist, dass er seine Wärme permanent abgibt.

14. Einrichtung nach einem der Ansprüche 3 bis 12, **dadurch gekennzeichnet, dass** der wärmespeichernde Stoff derart beschaffen ist, dass er seine Wärme auf Grund eines, z.B. mechanischen, Impulses oder unter dauerhafter mechanischer Belastung abgibt.

15. Einrichtung nach einem der Ansprüche 1 bis 14, **dadurch gekennzeichnet, dass** das Element (10) von einer wärmeisolierenden Hülle (31,32) umgeben ist.

16. Einrichtung nach Anspruch 15, **dadurch gekennzeichnet, dass** die wärmeisolierende Hülle (31,32) vom Polster (8,9) gebildet wird.

17. Einrichtung nach Anspruch 15 oder 16, **dadurch gekennzeichnet, dass** die auf der dem Benutzer zugewandten Seite des Elementes (10) liegende, wärmeisolierende Hülle (31) ein unter Druck erhöhtes Wärmeleitvermögen aufweist.

18. Einrichtung nach Anspruch 17, **dadurch gekennzeichnet, dass** die auf der dem Benutzer zugewandten Seite des Elementes (10) liegende, wärmeisolierende Hülle (31) kompressibel ist.

19. Einrichtung nach einem der Ansprüche 1 bis 18, **dadurch gekennzeichnet, dass** sie eine Steuereinrichtung (3) aufweist, welche die Heizeinrichtung (19) steuert.

20. Einrichtung nach Anspruch 19, **dadurch gekennzeichnet, dass** die Steuereinrichtung (3) mit einem Temperaturfühler verbunden ist, der die Temperatur des Elementes (10) erfasst.

21. Einrichtung nach einem der Ansprüche 1 bis 20, **dadurch gekennzeichnet, dass** das Element (10) oder ein im Element (10) enthaltener Stoff bei Betriebstemperatur eine latente wärmespeichernde Kapazität aufweist.

22. Seilbahnanlage mit einem Trag- und Förderseil und mit einer Vielzahl von Einrichtungen (1) zur Personenbeförderung, welche mit Befestigungseinrichtungen (12) versehen sind, mittels welcher sie am Trag- und Förderseil befestigbar sind, **dadurch gekennzeichnet, dass** die Einrichtungen (1) nach einem der Ansprüche 1 bis 21 ausgeführt sind.

23. Seilbahnanlage nach Anspruch 22, **dadurch gekennzeichnet, dass** in wenigstens einer Station der Seilbahnanlage Stromschienen vorgesehen sind, die mit der externen Energiequelle verbunden sind.

24. Seilbahnanlage nach Anspruch 22 oder 23 mit einem Bahnhof, in welchem die Einrichtungen (1) garagiert werden, wenn sie nicht benutzt werden, **dadurch gekennzeichnet, dass** im Bahnhof Stromschienen (5a) vorgesehen sind, die mit der externen Energiequelle verbunden sind und die mit den Anschlusseinrichtungen (21,22) zusammenwirken.

25. Seilbahnanlage nach einem der Ansprüche 22 bis 24, **dadurch gekennzeichnet, dass** in wenigstens einer Station ein Temperatursensor und/oder eine zentrale Steuerung für die Aufladung der Energiespeicher (2) und/oder der Elemente (10) angeordnet ist.
